(19) Europäisches Patentamt
European Patent Office
Office européen des brevets

(11) EP 3 522 335 A1

(12) EUROPEAN PATENT APPLICATION

(43) Date of publication:
07.08.2019 Bulletin 2019/32

(51) Int Cl.:
H02K 1/20 (2006.01)          H02K 1/32 (2006.01)
H02K 9/08 (2006.01)          H02K 9/19 (2006.01)

(21) Application number: 18155357.9

(22) Date of filing: 06.02.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: volabo GmbH
85521 Ottobrunn (DE)

(72) Inventors:
• MOROS, Oleg
  85737 Ismaning (DE)
• BACHHEIBL, Florian
  80799 München (DE)
• PATZAK, Adrian
  81541 München (DE)

(74) Representative: Epping - Hermann - Fischer
Patentanwaltsgesellschaft mbH
Schloßschmidstraße 5
80639 München (DE)

(54) ELECTRIC MACHINE

(57) An electric machine (10), comprises a stator (11), and a rotor (12) which is mounted movable relative to the stator (11). A gap (13) is arranged between the stator (11) and the rotor (12), and the rotor (12) comprises at least one cooling channel (14) within the rotor (12) or at an outer surface (15) of the rotor (12) where the outer surface (15) faces the gap (13), and where the at least one cooling channel (14) runs at least in places in a direction which is different from a vertical direction (z) which is parallel to a rotation axis of the rotor (12).

FIG 2A

EP 3 522 335 A1

FIG 2B

**Description**

The present invention relates to an electric machine with a stator and a rotor mounted movable relative to said stator.

Electric machines can be operated as a motor or a generator. The stator comprises an electric winding, which can be formed by copper coils or by bars arranged in slots in the stator where the winding comprises an electrically conductive material. The winding is connected to a power supply, which often has multiple phases. During operation of the electric machine torque is exerted on the rotor by a stator magnetic field and the rotor moves relative to the stator.

For mobile applications as for example in vehicles it is desired to keep the electric machine as small as possible. Therefore, an efficient cooling of the electric machine is required. The stator can be cooled from the outside in such a way that only a very small space is required for this stator cooling. As the rotor is moving during operation of the electric machine, its active cooling is associated with a considerable effort. An efficient cooling is required for the rotor as high losses can arise within the rotor which can lead to high temperatures of the rotor during operation.

If the electric machine is a closed device which is often the case it is possible to transfer heat from the rotor to the air in the gap between the stator and the rotor or to transfer heat from the rotor to the shaft on which the rotor is arranged. However, only a small amount of heat can be transferred in this way.

It is an objective to provide an electric machine with a cooling for the rotor with an increased efficiency.

This objective is solved by the independent claim. Further embodiments are the subject of dependent claims.

In one embodiment of the electric machine the electric machine comprises a stator. The stator can comprise an electrically conductive stator winding. The stator winding can be connected to a power supply. During operation of the electric machine the stator winding can be supplied with phase currents such that a magnetic field is induced by the stator winding.

The electric machine further comprises a rotor which is mounted movable relative to the stator. The rotor can be arranged to interact with the magnetic field induced by the stator winding during operation of the electric machine. During operation of the electric machine torque can be exerted on the rotor by the magnetic field and the rotor moves relative to the stator. The rotor can for example be a squirrel cage rotor. This means the rotor can comprise slots in which electrically conductive bars are arranged where the bars form a rotor winding of the rotor. The bars can be electrically connected at both sides of the rotor by short circuit rings and they can comprise aluminum or copper. It is further possible that the rotor is a rotor with buried permanent magnets, a rotor with surface mounted permanent magnets, a synchronous reluctance rotor, an asynchronously operating induction rotor or a synchronous rotor.

A gap is arranged between the stator and the rotor. This can mean, that in the region of the gap the stator and the rotor are not in direct contact. The gap can be an air gap. This means, air can be arranged within the gap. The rotor can be arranged within the stator, around the stator or next to the stator. Furthermore, the rotor can have the shape of a cylinder. The gap can be arranged adjacent to an outer surface of the rotor. The gap can completely surround the rotor at its lateral surface. The gap can also be arranged adjacent to an inner surface of the stator, where the inner surface of the stator faces the rotor. Furthermore, rotor and stator can have the shape of juxtaposed discs.

The rotor comprises at least one cooling channel within the rotor or at an outer surface of the rotor where the outer surface faces the gap, and where the at least one cooling channel runs at least in places in a direction which is different from a vertical direction which is parallel to a rotation axis of the rotor. The cooling channel can be arranged in such a way that if a gas or a liquid flows through the cooling channel the rotor can be cooled. The cooling channel can be arranged within the rotor such that it extends from a first side of the rotor to a second side of the rotor, where the second side of the rotor faces away from the first side. As an alternative or in addition the cooling channel can be arranged at the outer surface of the rotor such that it extends from the second side of the rotor to the first side of the rotor. The outer surface of the rotor can for example be the lateral surface of the rotor for the case that the rotor has the shape of a cylinder.

The rotation axis of the rotor can be the axis around which the rotor can rotate during operation of the electric machine. It is further possible that the rotor has a main axis of extension which is parallel to the rotation axis. That the cooling channel runs at least in places in a direction which is different from the vertical direction can mean that the cooling channel is not parallel to the rotation axis of the rotor at least in places. The cooling channel can have a shape which is different from a straight line or from a cylinder. For example, the cooling channel can have an asymmetric shape. That the cooling channel runs at least in places in a direction which is different from the vertical direction can also mean that a gas or a liquid which flows through the cooling channel does not only move in vertical direction but also at least in places in a direction which is different from the vertical direction. It is further possible that the cooling channel runs in places parallel to the vertical direction.

The cooling channel can be arranged to accommodate a cooling medium. The cooling medium can for example be a gas or liquid, as for example air or water. Preferably, the cooling medium can circulate within the electric machine in order to cool at least the rotor of the electric machine. In order to improve the efficiency of the cooling of the rotor, the cooling channel is shaped as described herein.

The cooling channel is arranged within the rotor or at the outer surface of the rotor which means that the cooling channel is in direct contact with the rotor which is to be cooled during operation. Thus, heat can be transferred from the rotor to the cooling medium within the cooling channel. As the cooling channel runs at least in places in a direction which is different from the vertical direction a non-laminar flow of the cooling medium can arise. Especially when the rotor is rotating a non-laminar flow of the cooling medium can be induced. Furthermore, the cooling medium can move in a direction which is not parallel to the vertical direction. Consequently, heat can be transferred from the rotor to the cooling medium more efficiently within the cooling channel.

It is advantageous to cool the rotor more efficiently as with decreasing temperature the electrical conductivity of most materials increases. Thus, the energy conversion coefficient and the overload capacity can be increased. It is further not necessary to increase the volume of the electric machine in order to increase the efficiency of the cooling of the rotor. It is rather possible to easily integrate the cooling channel as described herein within a rotor or at the outer surface of a rotor. In addition, no further costs arise for external cooling devices.

In one embodiment of the electric machine the cooling channel is shaped such that a gas or a liquid which moves from a first side of the rotor to a second side of the rotor within the cooling channel is forced to move in a radial direction at least in places, where the radial direction is perpendicular to the vertical direction and where the second side of the rotor faces away from the first side of the rotor. That the gas or liquid is forced to move in the radial direction at least in places can mean that the gas or liquid is forced to move in a certain direction by the shape of the cooling channel. The shape of the cooling channel determines how a gas or a liquid moves through the cooling channel. That the gas or liquid moves in a radial direction can mean that the velocity vector of the gas or the liquid has a component in the radial direction which is different from 0. The gas or the liquid can be a cooling medium. By moving the gas or the liquid in the radial direction at least in places the efficiency of cooling the rotor can be improved.

In one embodiment of the electric machine the at least one cooling channel has a helical shape. That the cooling channel has a helical shape can mean that the cooling channel has the shape of a helix or of a screw. It is possible that each cooling channel has a helical shape. By employing a cooling channel with a helical shape the cooling efficiency can be improved. Furthermore, the cooling efficiency is independent of the rotational direction of the rotor.

In one embodiment of the electric machine the at least one cooling channel has a vertically stretched spiral shape. This can mean, that different parts of the cooling channel are arranged at different distances from the rotation axis of the rotor. A cooling channel with a spiral shape has a preferred rotational direction for which the cooling is most efficient. During rotation of the rotor the actual velocity at a fixed position within the rotor depends on the distance to the rotation axis of the rotor. Therefore, different parts of the spiral shaped cooling channel are moved with different velocities depending on the distance to the rotation axis of the rotor. Furthermore, due to the rotation of the rotor a force in radial direction and away from the rotation axis is exerted on gases or liquids within the cooling channel. Thus, during rotation of the rotor gases or liquids within the cooling channel are moved from the first side to the second side of the rotor which results in a difference in pressure between the first side and the second side. In this way, the velocity of the gas or liquid within the cooling channel can be increased which increases the cooling efficiency.

In one embodiment of the electric machine the at least one cooling channel extends at least partially in a radial direction which is perpendicular to the rotation axis of the rotor. This can mean, that the cooling channel is shaped in such a way that a gas or a liquid within the cooling channel can move at least partially in the radial direction. Advantageously, with such a cooling channel the efficiency of the cooling of the rotor can be increased.

In one embodiment of the electric machine a cross section of the cooling channel is not constant along the rotation axis of the rotor, where the cross section of the cooling channel is given in a plane which is perpendicular to the rotation axis of the rotor. The cross section of the cooling channel marks the extent of the cooling channel in radial directions which are perpendicular to the vertical direction. For example the cross section of the cooling channel can be larger at one vertical position of the cooling channel than at another vertical position of the cooling channel. It is further possible that the shape of the cross section of the cooling channel differs for different vertical positions. This can mean that the geometry of the cooling channel is not constant along the rotation axis. For example the area of the cross section can increase or decrease along the vertical axis.

For a non-constant cross section of the cooling channel the difference in pressure at the two sides of the rotor can be influenced by the Bernoulli equation:

$$\int \frac{dP}{\rho} + \frac{v^2}{2} = const.$$

where P is the pressure within the gas or liquid within the cooling channel, $\rho$ is the density of the gas or liquid depending on the position and v is the velocity of the gas or liquid. In this simplified equation friction and the weight of the gas or liquid are neglected. This means, if the cross section of the cooling channel changes, also the velocity of the gas or liquid changes. In this case the velocity of the gas or liquid within the cooling channel depends on the vertical position. Therefore, the difference in pressure between the two sides of the rotor can be influenced and increased by changing the cross section of the cooling channel. The larger the difference in pressure between the two sides of the rotor, the faster the gas or liquid flows through the cooling channel which increases the efficiency of cooling of the rotor.

It is possible to further increase the difference in pressure between the two sides of the rotor and to increase the cooling efficiency by employing a cooling channel with a spiral shape and a cross-section which is not constant along the rotation axis of the rotor.

In one embodiment of the electric machine the at least one cooling channel has the shape of an Archimedean screw. In this way, a cooling medium which can be a gas or a liquid can be efficiently transported from the first side of the rotor to the second side. Thus, the rotor can be cooled more efficiently.

In one embodiment of the electric machine the rotor comprises at least two cooling channels. Within the rotor two or more cooling channels can be arranged. For example five or six cooling channels can be arranged within the rotor. It is further possible that at least two cooling channels are arranged at the outer surface of the rotor. By employing several cooling channels the cooling of the rotor can be more efficient.

In one embodiment of the electric machine at least one cooling channel of the at least two cooling channels is arranged within the rotor and at least another cooling channel of the at least two cooling channels is arranged at the outer surface of the rotor. In this way, gases or fluids can be moved from the first side of the rotor to the second side through the cooling channel which is arranged within the rotor and the gases or fluids can be moved back from the second side to the first side through the cooling channel which is arranged at the outer surface of the rotor. This means, the gases or fluids can circulate around the rotor. While moving through the rotor the gases or fluids can be heated by the rotor. While moving at the outer surface of the rotor the gases or fluids can be cooled again as the stator is arranged adjacent to the gap and the stator can be cooled by an external or internal cooling system. Advantageously, in this way the rotor can be cooled efficiently and no connection to an external cooling device is required for the rotor.

In one embodiment of the electric machine at least one cooling channel which is arranged within the rotor extends from a first side of the rotor to a second side of the rotor, where the second side faces away from the first side and where the cooling channel is surrounded by the rotor in radial directions which are perpendicular to the rotation axis of the rotor. This means, the cooling channel which is arranged within the rotor is completely surrounded by the rotor. In a radial direction the cooling channel within the rotor can for example be arranged between the rotation axis of the rotor and the rotor winding. This means, the rotor winding can be arranged closer to the outer surface of the rotor than the cooling channel which is arranged within the rotor. Arranging at least one cooling channel within the rotor, the rotor can be cooled efficiently.

In one embodiment of the electric machine at least one cooling channel which is arranged at the outer surface of the rotor extends from a second side of the rotor to a first side of the rotor, where the second side faces away from the first side and where the cooling channel is arranged at least partially as a recess at the outer surface of the rotor. This means, it is possible that the cooling channel which is arranged at the outer surface of the rotor is not surrounded by the rotor from all radial directions. At least in places the cooling channel which is arranged at the outer surface of the rotor can be in direct contact with the gap. The cooling channel which is arranged at the outer surface can be formed within the outer surface. This means, the cooling channel is arranged at least partially as a recess at the outer surface. The cooling channel can for example be formed as a trench or as a groove at the outer surface. The shape of the cooling channel at the outer surface can for example be helical. Preferably, at least two cooling channels are arranged at the outer surface of the rotor. The at least two cooling channels at the outer surface of the rotor can extent parallel to each other.

As the cooling channel runs at least in places in a direction which is different from the vertical direction, a gas or a liquid which moves within the cooling channel can move in a radial direction at least in places. In this way, the gas or liquid or a cooling medium which is warmed by the rotor from the first side to the second side can be cooled efficiently when flowing from the second side to the first side as the stator can be cooled externally or internally.

In one embodiment of the electric machine the cooling channel is arranged in such a way that a cooling medium can flow through the cooling channel from a first side of the rotor to a second side of the rotor, where the second side faces away from the first side. This means for example that the cooling channel is closed such that the cooling medium can flow through the cooling channel and not through other parts of the rotor. In this case, the cooling channel is arranged within the rotor. The cooling medium can for example be a gas or liquid. Preferably, the cooling medium has a small compressibility. Thus, the Bernoulli equation as given above can be applied. When the cooling medium flows through the cooling channel heat can be transferred from the rotor to the cooling medium. In this way, the rotor can be cooled. The cooling medium can flow through each cooling channel of the rotor. By employing the cooling medium the rotor can be cooled efficiently.

In one embodiment of the electric machine the gap and the cooling channel are connected in such a way that the cooling medium can flow through the gap from the second side to the first side of the rotor. This means, that the cooling channel and the gap are arranged in such a way that the cooling medium can flow from the first side to the second side of the rotor through the cooling channel which is arranged within the rotor and that the cooling medium can subsequently flow from the second side to the first side of the rotor through the gap. Thus, the cooling medium can circulate within the electric machine. For mobile applications as for example in vehicles the electric machine can be a closed device. The installation space of the electric machine can be closed. This can mean, that gases or liquids within the electric machine are not in direct contact with the environment of the electric machine. Consequently, due to the arrangement of the cooling channel and the gap the cooling medium does not need to be in contact with the environment of the electric machine such that the electric machine can be a closed device.

When the cooling medium flows through the cooling channels from the first side of the rotor to the second side the temperature of the cooling medium increases. A difference in pressure within the cooling channel arises between the first side and the second side. The difference in pressure leads to a backflow of the cooling medium from the second side to the first side, for example through the gap. In this way, convection is induced between the first side and the second side of the rotor. Furthermore, due to the induced backflow of the cooling medium, the cooling medium can circulate within the electric machine without the need for any support for example by a motor. Therefore, the rotor can be cooled efficiently. The cooling via the cooling medium can be the only cooling for the rotor.

In one embodiment of the electric machine the stator and the cooling channel are connected in such a way that the cooling medium can flow through the stator from the second side to the first side of the rotor. This means, for cooling down the cooling medium, it can flow through the stator which can be cooled more easily than the rotor, for example by an external cooling device. The stator and the cooling channel of the rotor can be arranged in such a way that the cooling medium can circulate through the cooling channel and through the stator. This means, the cooling medium can flow from the first side of the rotor to the second side and can be heated by the rotor. Due to the difference in pressure of the cooling medium between the first side and the second side of the rotor a backflow arises which can be led through the stator. Preferably, the backflow can be led through parts of the stator which can be easily cooled. For example, the cooling medium can flow through slots of the stator from the second side to the first side of the rotor. In case of a stator which comprises a cage winding, preferably, the cooling medium enters the stator from a side where a short circuit ring of the stator is arranged.

It is further possible that the cooling medium can flow through the stator through a stator cooling channel. The stator cooling channel can be arranged within the stator. It is further possible that the stator comprises at least two stator cooling channels. The stator cooling channel or the stator cooling channels can be arranged close to a cooling device of the stator. The stator can comprise one or more heat exchangers. The stator cooling channel or the stator cooling channels can be arranged close to the one or more heat exchangers of the stator.

In one embodiment of the electric machine the cooling medium can flow through an external cooling channel from the second side to the first side of the rotor. The extended cooling channel can be in contact with an external cooling device, such that the cooling medium which is heated by the rotor can be cooled down again.

It is further possible that the electric machine comprises guide vanes. The guide vanes can be arranged to guide the cooling medium. If the electric machine comprises more than one rotor, guide vanes can be arranged between the rotors.

In one embodiment of the electric machine at least one further cooling channel is arranged at an inner surface of the stator, where the inner surface of the stator faces the gap. The further cooling channel can be shaped similar to a cooling channel which is arranged at the outer surface of the rotor. This means, the further cooling channel can for example be a recess or a groove at the inner surface of the stator. The inner surface of the stator is arranged adjacent to the gap. Thus, the further cooling channel can be in direct contact with the gap. The further cooling channel can be shaped as a cooling channel described herein. For example the further cooling channel can have a helical or a spiral shape. In this way, the cooling medium can be led efficiently from the second side of the rotor back to the first side of the rotor. Therefore, also the velocity of the cooling medium within the further cooling channel can be increased and the efficiency for cooling the rotor can be increased as well.

In one embodiment of the electric machine the stator comprises at least two slots in which each at least one electrically conductive bar is arranged, respectively, and the at least two electrically conductive bars form an electric winding of the stator and are arranged to be supplied with a corresponding electrical phase, respectively, by a power supply. The stator can be arranged similar to a squirrel cage rotor where the bars form a short circuit only on a second side of the stator, for example by forming a short circuit ring. At a first side of the stator which faces away from the second side the bars are each electrically connected with the power supply. Thus, the bars in the slots can be controlled individually or in groups by the power supply with a respective electrical phase. The bars can be arranged within the slots in such a way that the slots are not completely filled by the bars. In this case, the cooling medium can be led through the slots of the stator from the second side to the first side of the stator. As the bars can be cooled, the cooling medium can be cooled by the direct contact to the bars within the slots. Thus, the rotor can be cooled efficiently.

The following description of figures may further illustrate and explain exemplary embodiments. Components that are functionally identical or have an identical effect are denoted by identical references. Identical or effectively identical components might be described only with respect to the figures where they occur first. Their description is not necessarily repeated in successive figures.

In figure 1 a rotor with cooling channels is shown.

In figures 2A and 2B an exemplary embodiment of a rotor with helical shaped cooling channels is shown.

In figures 3A and 3B an exemplary embodiment of a rotor with spiral shaped cooling channels is shown.

In figures 4A, 4B, 5A and 5B a cross section through exemplary embodiments of an electric machine are shown.

In figures 6A and 6B an exemplary embodiment of a rotor with helical shaped cooling channel is shown.

In figures 7A and 7B views on an exemplary embodiment of a rotor from two different sides of the rotor are shown.

In figure 8A an exemplary embodiment of a rotor with cooling channels at the outer surface of the rotor is shown.

In figure 8B an exemplary embodiment of a stator with further cooling channels is shown.

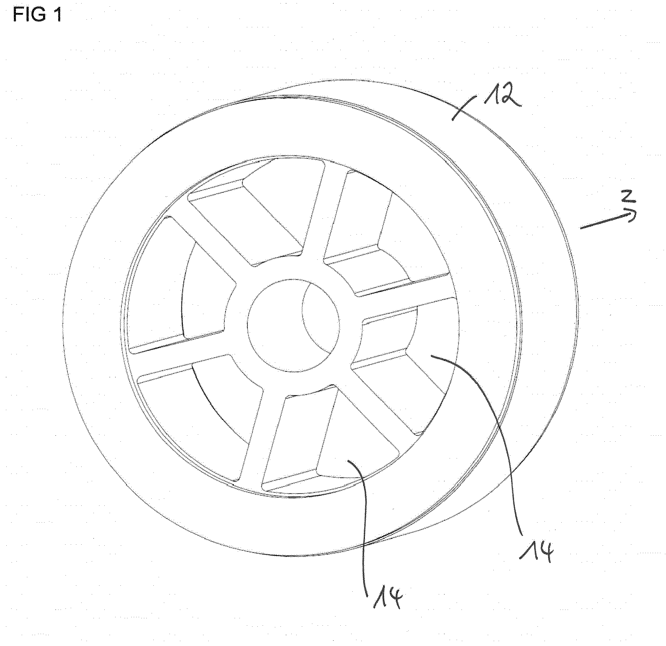

With figure 1 it is shown that cooling channels 14 can be arranged within a rotor 12 of an electric machine 10. The cooling channels 14 can extend in a vertical direction z which is parallel to the rotation axis of the rotor 12.

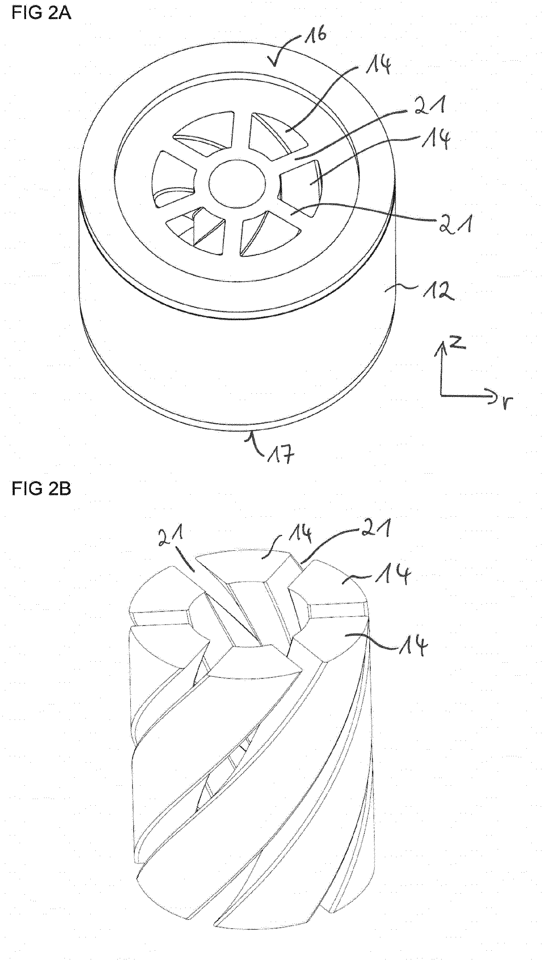

In figure 2A an exemplary embodiment of a rotor 12 is shown. The rotor 12 has the shape of a cylinder and can for example be a squirrel cage rotor. The rotor 12 comprises six cooling channels 14. The cooling channels 14 are arranged within the rotor 12. Between the cooling channels 14 spokes 21 are arranged. The cooling channels 14 run at least in places in a direction which is different from a vertical direction z which is parallel to a rotation axis of the rotor 12. In contrast, the cooling channels 14 shown in figure 1 completely run along the vertical direction z. The cooling channels 14 shown in figure 2A extend from a first side 16 of the rotor 12 to a second side 17 of the rotor 12, where the second side 17 faces away from the first side 16. Furthermore, the cooling channels 14 have a helical shape. Consequently, the cooling channels 14 are shaped such that a gas or a liquid which moves from the first side 16 of the rotor 12 to the second side 17 of the rotor 12 within the cooling channels 14 is forced to move in a radial direction r at least in places, where the radial direction r is perpendicular to the vertical direction z. This means, the cooling channels 14 extend at least partially in the radial direction r.

In figure 2B the six cooling channels 14 shown in figure 2A are depicted without the surrounding rotor 12. The space between the cooling channels 14 is filled by the spokes 21 shown in figure 2A.

It is further possible that the cooling channels 14 are not symmetric to each other which is not shown.

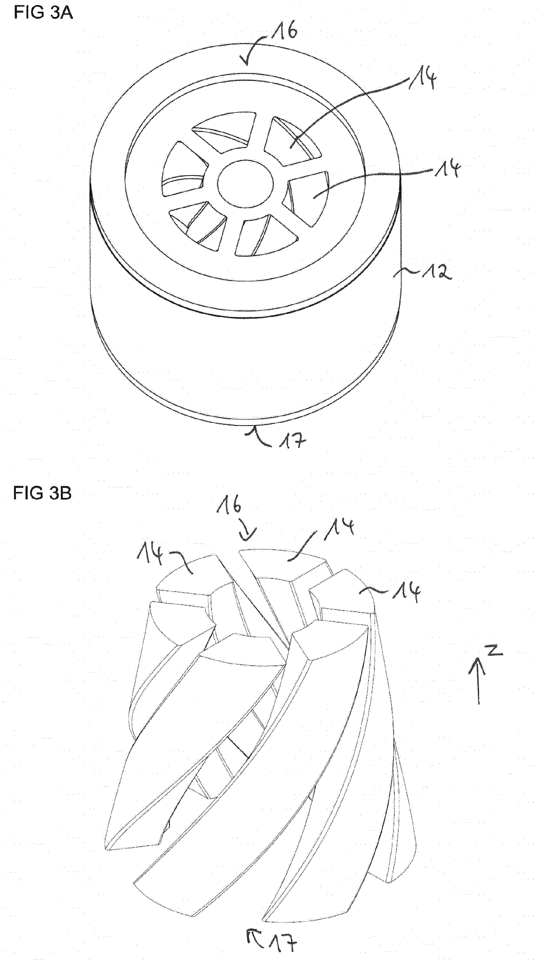

In figure 3A an exemplary embodiment of the rotor 12 is shown. The rotor 12 is shown from the first side 16. The rotor 12 comprises six cooling channels 14 which have a spiral shape.

In figure 3B the six cooling channels 14 shown in figure 3A are depicted without the surrounding rotor 12. Due to the spiral shape of the cooling channels 14 the distance of each cooling channel 14 from the rotation axis of the rotor 12 increases from the first side 16 to the second side 17.

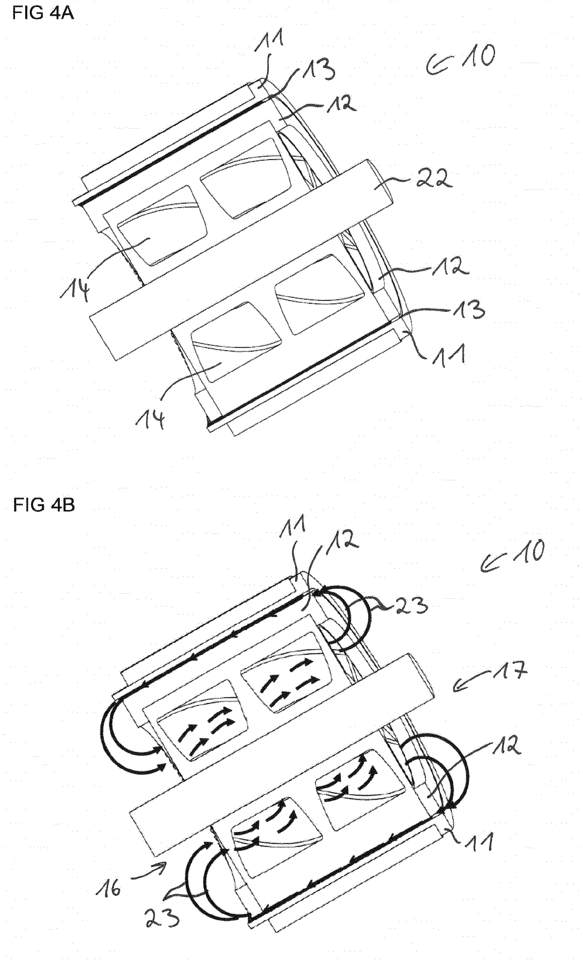

In figure 4A a cross section through an exemplary embodiment of the electric machine 10 is shown. The electric machine 10 comprises a stator 11 and the rotor 12 which is mounted movable relative to the stator 11. A gap 13 is arranged between the stator 11 and the rotor 12. The rotor 12 is mounted on a shaft 22 and the rotor 12 is arranged within the stator 11. At least two cooling channels 14 are arranged within the rotor 12.

With figure 4B the movement of a cooling medium 23 within the electric machine 10 is illustrated. In figure 4B the same cross section of the electric machine 10 as shown in figure 4A is depicted. Furthermore, the movement of the cooling medium 23 is illustrated with arrows. The cooling medium 23 flows through the cooling channels 14 from the first side 16 of the rotor 12 to the second side 17 of the rotor 12. As the rotor 12 warms up during operation of the electric machine 10, also the cooling medium 23 warms up on the way from the first side 16 to the second side 17. Therefore, a difference in pressure within the cooling medium 23 between the first side 16 and the second side 17 arises. The movement of the cooling medium 23 within the cooling channels 14 can be influenced by the shape of the cooling channels 14. For example, the difference in the pressure can be increased by employing cooling channels 14 with a spiral shape. Furthermore, due to the shape of the cooling channels 14, heat can be transferred more efficiently from the rotor 12 to the cooling medium 23 than for example for the cooling channels 14 shown in figure 1. In cooling channels 14 as shown in figure 4B a non-laminar flow can arise which increases the efficiency of heat transfer from the rotor 12 to the cooling medium 23.

At the second side 17 the cooling medium 23 is led to the gap 13. Due to the difference in pressure between the first side 16 and the second side 17 a backflow arises and the cooling medium 23 flows through the gap 13 from the second side 17 to the first side 16. The stator 11 can be cooled more easily than the rotor 12 as the stator 11 is not moving during operation of the electric machine 10. The stator 11 can for example be cooled by an external cooling device. As the gap 13 is arranged adjacent to the stator 11, the cooling medium 23 flowing through the gap 13 is cooled by the direct contact to the stator 11. At the first side 16 the cooled cooling medium 23 can flow through the cooling channels 14 from the first side 16 to the second side 17 again. In this way, a circulation of the cooling medium 23 through the electric machine 10 is established. Consequently, the rotor 12 can be cooled efficiently without employing external cooling device for cooling the rotor 12 directly.

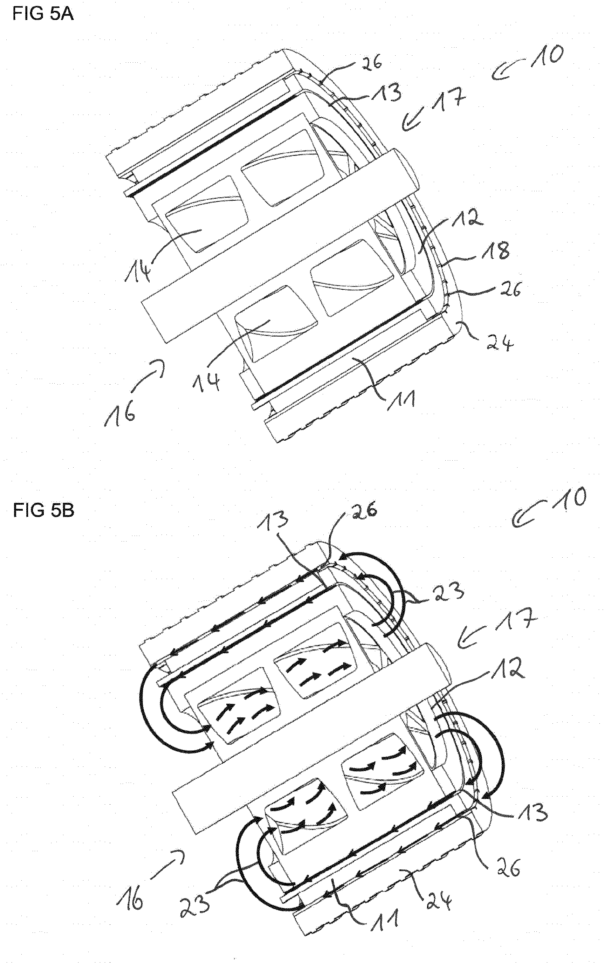

In figure 5A a cross section through an exemplary embodiment of the electric machine 10 is shown. In comparison to the electric machine 10 which is shown in figure 4A, in this case the stator 11 comprises stator cooling channels 26. Furthermore, the stator 11 is arranged within a housing 24. Such a housing 24 can be formed for example by a container or by a cooling jacket. The stator cooling channels 26 are arranged between the stator 11 and its housing 24. It is further possible that at least one stator cooling channel 26 is arranged within the stator 11 which is not shown. The stator cooling channels 26 can have a shape as described for the cooling channels 14 arranged within the rotor 12. For example, the stator cooling channels 26 can have a helical or a spiral shape. The stator cooling channels 26 extend from a second side 17 of the stator 11 to a first side 16 of the stator 11, where the second side 17 faces away from the first side 16. The stator cooling channels 26 can be arranged adjacent or close to cooling devices of the stator 11.

With figure 5B the movement of the cooling medium 23 within the electric machine 10 is illustrated. In figure 5B the same cross section of the electric machine 10 as shown in figure 5A is depicted. Furthermore, the movement of the cooling medium 23 is illustrated with arrows. In comparison to the case shown in figure 4B, in this case the cooling medium 23 can also flow through the stator cooling channels 26 between the stator 11 and its housing 24. The cooling medium 23 flows from the second side 17 of the stator 11 to the first side 16. As the stator cooling channels 26 are arranged between the stator 11 and its housing 24 which can be easily cooled, the cooling medium 23 can be efficiently cooled within the stator cooling channels 26.

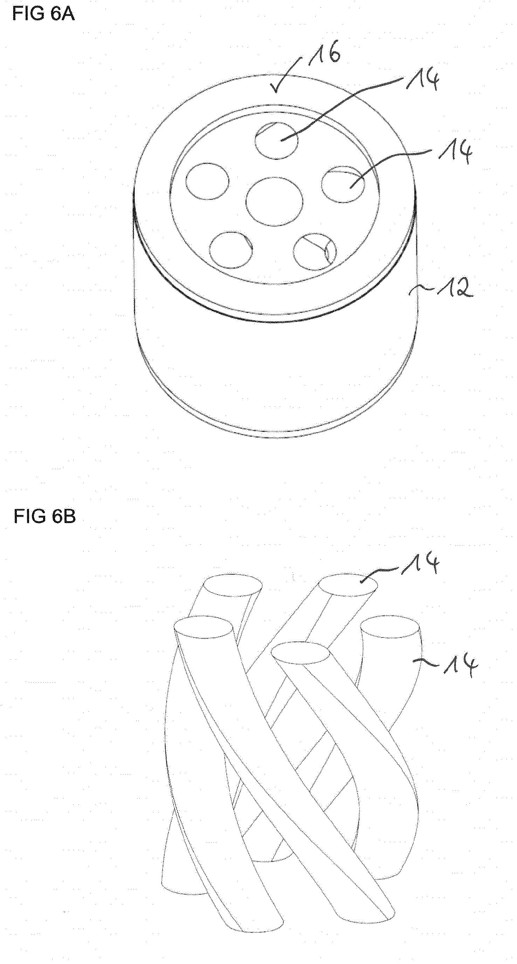

In figure 6 an exemplary embodiment of the rotor 12 is shown. The rotor 12 is shown from the first side 16. The rotor 12 comprises five cooling channels 14 which have a helical shape.

In figure 6B the five cooling channels 14 shown in figure 6A are depicted without the surrounding rotor 12. The cooling channels 14 have a circular shaped cross section.

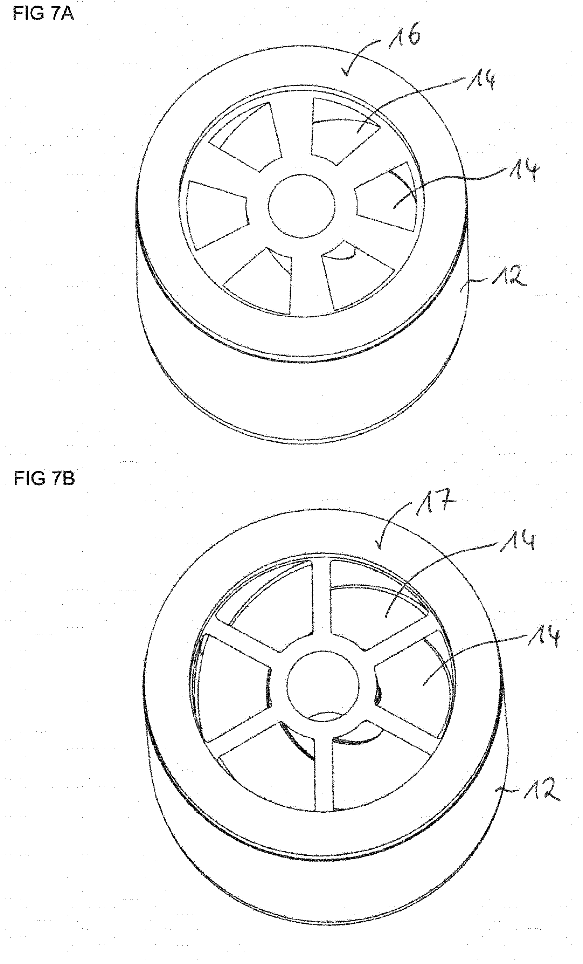

In figure 7A an exemplary embodiment of the rotor 12 seen from the first side 16 is shown. The rotor 12 comprises six cooling channels 14 which have a spiral shape.

In figure 7B the rotor 12 shown in figure 7A is shown from the second side 17. As the cooling channels 14 have a spiral shape the cross section of the cooling channels 14 is larger at the second side 17 than at the first side 16. This means, the cross section of the cooling channels 14 is not constant along the rotation axis of the rotor 12, where the cross section of the cooling channels 14 is given in a plane which is perpendicular to the rotation axis of the rotor 12.

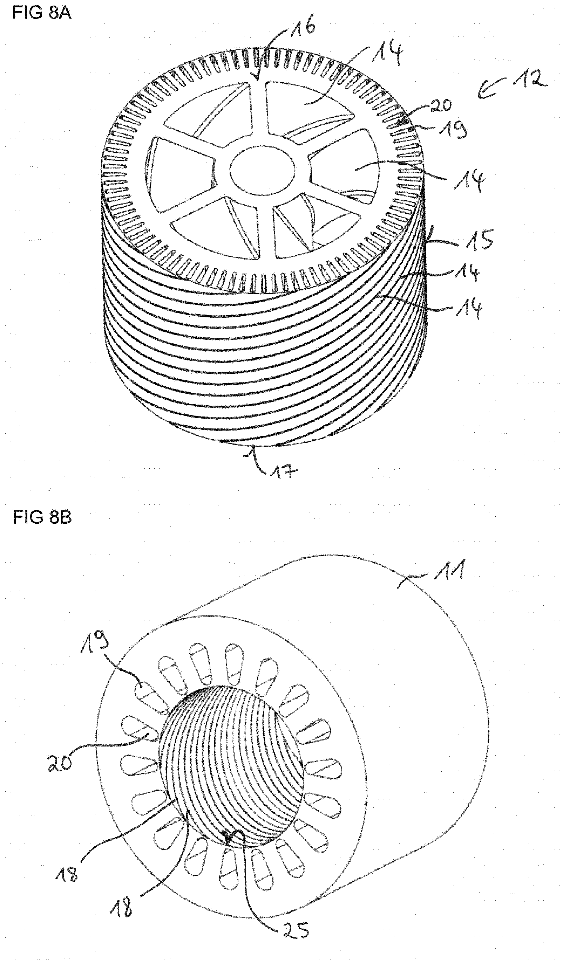

In figure 8A an exemplary embodiment of the rotor 12 is shown. The rotor 12 comprises six cooling channels 14 which are arranged within the rotor 12. Furthermore, the rotor 12 comprises a plurality of slots 19 in which a rotor winding is arranged. The rotor winding can be formed for example by solid bars 20. The slots 19 can have an inclined or skewed shape which can be different from the shape of the cooling channels 14. The rotor 12 further comprises a plurality of cooling channels 14 at an outer surface 15 of the rotor 12. The outer surface 15 of the rotor 12 faces the gap 13. For example, the outer surface 15 of the rotor 12 can be the lateral surface of the rotor 12. The cooling channels 14 which are arranged at the outer surface 15 extend from the first side 16 to the second side 17 and have a helical shape. The cooling channels 14 which are arranged at the outer surface 15 are arranged as recesses at the outer surface 15. This means, the cooling channels 14 at the outer surface 15 are in direct contact with the gap 13. The cooling medium 23 can be efficiently transported through the cooling channels 14 at the outer surface 15 from the second side 17 to the first side 16 of the rotor 12. Thus, the efficiency of cooling the rotor 12 is increased.

In figure 8B an exemplary embodiment of the stator 11 is shown. The stator 11 comprises a plurality of slots 19 in which each at least one electrically conductive bar 20 is arranged, respectively. The electrically conductive bars 20 form an electric winding of the stator 11 and are arranged to be supplied with a corresponding electrical phase, respectively, by a power supply. Moreover, the stator 11 comprises further cooling channels 18 which are arranged at an inner surface 25 of the stator 11. The inner surface 25 of the stator 11 faces the gap 13. This means, the further cooling channels 18 are arranged adjacent to the gap 13. The further cooling channels 18 have a helical shape and can be shaped as described with figure 8A for the cooling channels 14 at the outer surface 15 of the rotor 12. With the further cooling channels 18 being arranged at the inner surface 25 of the stator 11 the cooling medium 23 can be efficiently transported through the further cooling channels 18. In this way, the rotor 12 can be cooled more efficiently.

Reference numerals

10: electric machine
11: stator
12: rotor
13: gap

14: cooling channel
15: outer surface
16: first side
17: second side
18: further cooling channel
19: slot
20: bar
21: spoke
22: shaft
23: cooling medium
24: housing
25: inner surface
26: stator cooling channel
r: radial direction
z: vertical direction

**Claims**

1. Electric machine (10), comprising:

   - a stator (11), and
   - a rotor (12) which is mounted movable relative to the stator (11), wherein
   - a gap (13) is arranged between the stator (11) and the rotor (12), and
   - the rotor (12) comprises at least one cooling channel (14) within the rotor (12) or at an outer surface (15) of the rotor (12) where the outer surface (15) faces the gap (13), and where the at least one cooling channel (14) runs at least in places in a direction which is different from a vertical direction (z) which is parallel to a rotation axis of the rotor (12).

2. Electric machine (10) according to claim 1, where the cooling channel (14) is shaped such that a gas or a liquid which moves from a first side (16) of the rotor (12) to a second side (17) of the rotor (12) within the cooling channel (14) is forced to move in a radial direction (r) at least in places, where the radial direction (r) is perpendicular to the vertical direction (z) and where the second side (17) of the rotor (12) faces away from the first side (16) of the rotor (12).

3. Electric machine (10) according to one of the preceding claims, where the at least one cooling channel (14) has a helical shape.

4. Electric machine (10) according to one of the preceding claims, where the at least one cooling channel (14) has a vertically stretched spiral shape.

5. Electric machine (10) according to one of the preceding claims, where the at least one cooling channel (14) extends at least partially in a radial direction (r) which is perpendicular to the rotation axis of the rotor (12).

6. Electric machine (10) according to one of the preceding claims, where a cross section of the cooling channel (14) is not constant along the rotation axis of the rotor (12), where the cross section of the cooling channel (14) is given in a plane which is perpendicular to the rotation axis of the rotor (12).

7. Electric machine (10) according to one of the preceding claims, where the at least one cooling channel (14) has the shape of an Archimedean screw.

8. Electric machine (10) according to one of the preceding claims, where the rotor (12) comprises at least two cooling channels (14).

9. Electric machine (10) according to the preceding claim, where at least one cooling channel (14) of the at least two cooling channels (14) is arranged within the rotor (12) and at least another cooling channel (14) of the at least two cooling channels (14) is arranged at the outer surface (15) of the rotor (12).

10. Electric machine (10) according to one of the preceding claims, where at least one cooling channel (14) which is arranged within the rotor (12) extends from a first side (16) of the rotor (12) to a second side (17) of the rotor (12), where the second side (17) faces away from the first side (16) and where the cooling channel (14) is surrounded by the rotor (12) in radial directions (r) which are perpendicular to the rotation axis of the rotor (12).

11. Electric machine (10) according to one of the preceding claims, where at least one cooling channel (14) which is arranged at the outer surface (15) of the rotor (12) extends from a second side (17) of the rotor (12) to a first side (16) of the rotor (12), where the second side (17) faces away from the first side (16) and where the cooling channel (14) is arranged at least partially as a recess at the outer surface (15) of the rotor (12).

12. Electric machine (10) according to one of the preceding claims, where the cooling channel (14) is arranged in such a way that a cooling medium (23) can flow through the cooling channel (14) from a first side (16) of the rotor (12) to a second side (17) of the rotor (12), where the second side (17) faces away from the first side (16).

13. Electric machine (10) according to the preceding claim, where the gap (13) and the cooling channel (14) are connected in such a way that the cooling medium (23) can flow through the gap (13) from the second side (17) to the first side (16) of the rotor (12).

14. Electric machine (10) according to one of the claims 12 or 13, where the stator (11) and the cooling channel (14) are connected in such a way that the cooling medium (23) can flow through the stator (11) from the second side (17) to the first side (16) of the rotor (12).

15. Electric machine (10) according to one of the preceding claims, where at least one further cooling channel (18) is arranged at an inner surface (25) of the stator (11), where the inner surface (25) of the stator (11) faces the gap (13).

16. Electric machine (10) according to one of the preceding claims, where the stator (11) comprises at least two slots (19) in which each at least one electrically conductive bar (20) is arranged, respectively, and the at least two electrically conductive bars (20) form an electric winding of the stator (11) and are arranged to be supplied with a corresponding electrical phase, respectively, by a power supply.

FIG 1

FIG 2A

FIG 2B

FIG 3A

FIG 3B

FIG 4A

FIG 4B

FIG 5A

FIG 5B

FIG 6A

FIG 6B

FIG 7A

FIG 7B

FIG 8A

FIG 8B

Europäisches
Patentamt

European
Patent Office

Office européen
des brevets

# EUROPEAN SEARCH REPORT

Application Number

EP 18 15 5357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 912 586 A (ALF LYSHOLM) 6 June 1933 (1933-06-06) * page 1, line 21 - page 2, line 46; figures 1-4 * | 1,3,7,8, 11,12 | INV. H02K1/20 H02K1/32 H02K9/08 H02K9/19 |
| X | US 2008/197725 A1 (HUSBAND STEPHEN M [GB] ET AL) 21 August 2008 (2008-08-21) | 1,3,7,8, 11,12, 15,16 | |
| Y | * paragraph [0041] - paragraph [0053]; figures 4-8 * | 2,4,9, 13,14 | |
| X | DE 44 14 219 A1 (DAIMLER BENZ AG [DE]) 26 October 1995 (1995-10-26) | 1,3,8, 10,12 | |
| Y | * column 2, line 7 - column 3, line 36; figures 2, 3 * | 2,4-6,9, 13,14 | |
| Y | WO 2007/113024 A1 (SIEMENS AG [DE]; WEISS SEBASTIAN [DE]) 11 October 2007 (2007-10-11) * page 6, line 26 - page 7, line 3; figure 1 * | 2,5 | |
| Y | EP 1 898 513 A1 (SIEMENS AG [DE]) 12 March 2008 (2008-03-12) * figures 4, 5 * | 4,6 | TECHNICAL FIELDS SEARCHED (IPC) H02K |
| Y | EP 1 333 561 A2 (UQM TECH INC [US]) 6 August 2003 (2003-08-06) * paragraph [0027]; figure 3 * | 13,14 | |

The present search report has been drawn up for all claims

| Place of search | Date of completion of the search | Examiner |
|---|---|---|
| The Hague | 6 August 2018 | Mazagão Guerreiro, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 5357

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2018

| Patent document cited in search report | | Publication date | Patent family member(s) | | Publication date |
|---|---|---|---|---|---|
| US 1912586 | A | 06-06-1933 | NL | 31498 C | 06-08-2018 |
| | | | US | 1912586 A | 06-06-1933 |
| US 2008197725 | A1 | 21-08-2008 | GB | 2446686 A | 20-08-2008 |
| | | | US | 2008197725 A1 | 21-08-2008 |
| DE 4414219 | A1 | 26-10-1995 | NONE | | |
| WO 2007113024 | A1 | 11-10-2007 | AT | 501543 T | 15-03-2011 |
| | | | BR | PI0709889 A2 | 26-07-2011 |
| | | | CN | 101411037 A | 15-04-2009 |
| | | | DE | 102006015064 A1 | 18-10-2007 |
| | | | EP | 2002526 A1 | 17-12-2008 |
| | | | RU | 2008143265 A | 10-05-2010 |
| | | | US | 2009273246 A1 | 05-11-2009 |
| | | | WO | 2007113024 A1 | 11-10-2007 |
| EP 1898513 | A1 | 12-03-2008 | CN | 101512872 A | 19-08-2009 |
| | | | EP | 1898513 A1 | 12-03-2008 |
| | | | EP | 2059990 A1 | 20-05-2009 |
| | | | US | 2011163640 A1 | 07-07-2011 |
| | | | WO | 2008028730 A1 | 13-03-2008 |
| EP 1333561 | A2 | 06-08-2003 | CA | 2416485 A1 | 30-07-2003 |
| | | | EP | 1333561 A2 | 06-08-2003 |
| | | | US | 2004036367 A1 | 26-02-2004 |

EPO FORM P0459

For more details about this annex : see Official Journal of the European Patent Office, No. 12/82